(19) **Europäisches Patentamt / European Patent Office / Office européen des brevets**

(11) **EP 2 955 887 B1**

(12) **FASCICULE DE BREVET EUROPEEN**

(45) Date de publication et mention
de la délivrance du brevet:
**28.12.2016 Bulletin 2016/52**

(51) Int Cl.:
*H04L 12/801* (2013.01)　　　*H04L 12/803* (2013.01)

(21) Numéro de dépôt: **14305875.8**

(22) Date de dépôt: **10.06.2014**

(54) **Procédé de répartition de charge dynamique dans un réseau privé**

Verfahren zur dynamischen Lastverteilung in einem privaten Netz

Method for dynamic load distribution in a private network

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**16.12.2015 Bulletin 2015/51**

(73) Titulaire: **Osmozis
34830 Clapiers (FR)**

(72) Inventeur: **Pateloup, Tristan
34830 CLAPIERS (FR)**

(74) Mandataire: **Regimbeau
20, rue de Chazelles
75847 Paris Cedex 17 (FR)**

(56) Documents cités:
**US-A- 6 023 724　　US-B1- 7 881 208**

**Description**

DOMAINE GENERAL

L'invention se rapporte au domaine du routage de données dans un réseau.
L'invention concerne plus particulièrement un procédé de répartition de charge dynamique dans un réseau privé.

ETAT DE L'ART

Une passerelle d'accès à un réseau externe tel qu'Internet comprend généralement une unique interface de connexion vers ce réseau externe.
Une telle passerelle d'accès fournit une connectivité au réseau externe par l'intermédiaire d'un réseau d'accès placé sous le contrôle d'un fournisseur d'accès.
La passerelle est généralement fournie par le fournisseur d'accès. Le fournisseur d'accès garde un contrôle étroit sur le fonctionnement interne de la passerelle.
Des données à destination du réseau externe, émises par un équipement connecté à un réseau privé comprenant une telle passerelle, transitent successivement par le réseau privé et le réseau d'accès du fournisseur d'accès avant d'atteindre le destinataire. Réciproquement, les données envoyées en retour par le destinataire à l'équipement émetteur, transitent depuis le réseau externe successivement par le réseau d'accès puis le réseau privé.
La qualité de transmission de ces données échangées avec le réseau externe peut être affectée à plusieurs niveaux, notamment au niveau du réseau privé et au niveau du réseau d'accès contrôlé par le fournisseur d'accès.
La qualité de transmission peut être notamment diminuée, pour des raisons extérieures au réseau privé, ces diminutions étant hors de contrôle du gestionnaire du réseau privé.
La qualité de transmission des données peut par exemple être diminuée à l'initiative du fournisseur d'accès. Il est en effet fréquent qu'un fournisseur d'accès impose un quota de volume de données transmissibles via une passerelle d'accès, c'est-à-dire un volume de données transmissible prédéterminé sur son réseau d'accès au cours d'une période de temps donnée (un tel quota de volume est par exemple compté en gigaoctets par mois). Lorsque ce volume de données échangées par une passerelle d'accès avec le réseau d'accès correspondant dépasse le quota de volume, le fournisseur dégrade volontairement la qualité de transmission des données en provenance de la passerelle sur son réseau d'accès.
La qualité de transmission peut en outre être dégradée à cause d'équipements externes au réseau privé sollicités pour l'acheminement des données jusqu'au destinataire des données.
Un gestionnaire du réseau privé n'a aucun contrôle sur de tels équipements externes, et ne peut donc pas réparer ces équipements.
Une solution connue pouvant être mise en oeuvre par le gestionnaire du réseau privé pour contourner ces problèmes, et ainsi augmenter la qualité de transmission de données à destination du réseau externe, est de multiplier le nombre de passerelles d'accès installées dans son réseau privé.
La présence de plusieurs passerelles d'accès permet en effet de pallier la défaillance d'une des passerelles d'accès.
Cette redondance de passerelles d'accès autorise également la mise en oeuvre d'une répartition de charge dans le réseau privé, c'est-à-dire une répartition du trafic de données à transmettre dans le réseau privé vers plusieurs passerelles d'accès du réseau privé, et donc vers plusieurs réseaux d'accès en parallèle. Une telle répartition de charge permet d'augmenter le débit global en émission vers le réseau externe, et en réception depuis ce dernier.
Pour mettre en oeuvre une telle répartition de charge, on inclut au réseau privé au moins un routeur connecté à plusieurs des passerelles d'accès. Le routeur émet vers chaque passerelle d'accès une partie correspondante des données entrantes émise par un terminal utilisateur.
Différents protocoles permettant de mettre en oeuvre une répartition de charge de façon dynamique dans un routeur sont connus.
Les protocoles du type GLBP (« Global Load Balancing Protocol », décrit dans le document US7881208 B1) et CARP (« Common Address Redundancy Protocol », décrit dans la norme RFC 3040) sont des protocoles de redondance de passerelles qui offre également des fonctionnalités de répartition de charge. Ces protocoles gèrent la redondance en définissant une seule adresse IP virtuelle de passerelle mais en fournissant des réponses différentes (dans le but de répartir la charge) d'adresse MAC lors de chaque requête ARP concernant cette adresse IP. Toutefois, lors de la mise en oeuvre de ces protocoles, l'intégralité du trafic issu d'un routeur donné est redirigée vers une seule et même passerelle d'accès durant un laps de temps donné (temps de validité de l'entrée correspondante dans le cache ARP du routeur). Ces protocoles ne permettent donc pas de répartir entre plusieurs passerelles le trafic issu d'un même routeur.
On connaît par ailleurs le protocole de routage dynamique interne à états de lien OSPF version 2 (« Open Shortest Path First », décrit dans la norme RFC 2328). Si ce protocole peut mettre en oeuvre une répartition de charge, il n'autorise cependant qu'un partage de charge égal entre plusieurs routes (c'est-à-dire que la même proportion de trafic est envoyée sur chacune des routes). Ce protocole OSPF, peu flexible d'utilisation, ne permet donc pas de choisir librement la charge arrivant à chaque passerelle sans modifier la topologie du réseau privé.

On connaît en outre le protocole EIGRP (« Enhanced Internat Gateway Routing Protocol »), qui autorise un partage de charge inégale entre plusieurs routes.

Toutefois, le protocole EIGRP et les autres protocoles susmentionnés présentent deux inconvénients majeurs.

Premièrement, ces protocoles de routage impliquent que les passerelles d'accès doivent implémenter ces protocoles, ce qui est rarement le cas dans les équipements fournis ou imposés par les fournisseurs d'accès au réseau externe. La substitution de ces équipements par d'autres supportant le ou les protocoles voulus, lorsqu'elle est possible, imposent donc un surcoût.

Deuxièmement, ces protocoles sont insuffisants pour mettre en oeuvre une répartition de charge dans le réseau privé qui permette de pallier de façon optimale les événements extérieurs au réseau privé susceptible de diminuer la qualité de transmission des données à destination du réseau externe.

PRESENTATION DE L'INVENTION

L'invention vise à augmenter la qualité de transmission de données transitant par un réseau privé et un réseau externe, sans avoir à modifier le fonctionnement de passerelles d'accès au réseau externe via le réseau privé, ou celui d'équipements extérieurs au réseau privé.

L'invention vise également à pallier une réduction de cette qualité de transmission causée par des équipements externes au réseau privé, non contrôlables par un gestionnaire d'un tel réseau privé.

Il est donc proposé un procédé de répartition de charge dynamique dans un réseau privé comprenant au moins un routeur et une pluralité de passerelles d'accès à un réseau externe, chaque passerelle offrant une route menant au réseau externe et étant associée à au moins un serveur de nom de domaine intervenant dans la transmission dans le réseau externe de données en provenance de la passerelle, le procédé étant caractérisé par les étapes suivantes:

- test de fiabilité d'un accès au réseau externe via une passerelle de référence, le test de fiabilité comprenant un test de disponibilité d'au moins un serveur DNS associé à la passerelle de référence,
- répartition sur lesdites routes et émission, par le routeur, de données à destination du réseau externe, en fonction des résultats du test de fiabilité.

Dans le procédé proposé, il est tenu compte de l'accessibilité des serveurs DNS associés aux passerelles d'accès pour répartir les différentes données à destination du réseau externe.

De façon connue en soi, un serveur DNS est configuré pour déterminer une adresse IP à partir d'un nom de domaine.

Dans le cadre de la transmission de données depuis le réseau privé vers le réseau externe, chaque passerelle d'accès sollicite un ou plusieurs serveurs DNS pour obtenir une adresse IP à partir d'un nom de domaine contenu dans les données.

Si un serveur DNS donné n'est pas accessible par la passerelle associée, une adresse de destination contenue dans les données à transmettre vers le réseau externe, et qui se présente sous la forme d'un nom de domaine, ne peut pas être correctement résolue par ce serveur en une adresse IP de destination.

En particulier, si aucun des serveurs DNS associés à une passerelle d'accès donnée n'est accessible par cette passerelle, des données transmises par cette passerelle d'accès vers le réseau externe sur la base d'une adresse en nom de domaine ne pourront pas arriver à destination.

Or, une connexion à un réseau externe n'est généralement pas exploitable au niveau applicatif en l'absence de service de résolution de nom de domaine fonctionnel.

La répartition de charge mise en oeuvre au sein du réseau privé par le procédé proposé permet donc de prendre en considération des éventuelles défaillances des serveurs DNS sollicités pour mener à bien la transmission dans le réseau externe de données émanant du réseau privé.

L'invention peut également être complétée par les caractéristiques suivantes, prises seules ou en une quelconque de leurs combinaisons techniquement possibles.

Le test de fiabilité peut comprendre l'émission, par un équipement scrutateur du réseau privé, d'un moins une première requête de test à destination de chaque serveur DNS associé à la passerelle de référence, la route offerte par la passerelle de référence étant exclue de la répartition si l'équipement scrutateur ne reçoit aucune réponse à au moins une des premières requêtes de test dans un délai prédéterminé.

Ceci permet d'augmenter la fiabilité générale d'accès au réseau externe depuis le réseau privé, en éliminant les passerelles d'accès associées à un ou des serveurs DNS lents, voire inopérants.

Le test de fiabilité peut comprendre l'émission, par un équipement scrutateur du réseau privé, d'une deuxième requête de test à destination de la passerelle de référence, la route offerte par la passerelle de référence étant exclue de la répartition si l'équipement scrutateur ne reçoit pas de réponse à la deuxième requête de test dans un délai prédéterminé.

Les passerelles d'accès elles-mêmes défaillantes peuvent ainsi être détectées sans forcément avoir besoin de vérifier la disponibilité du ou des serveurs DNS correspondants. Par ailleurs, ce test permet de gérer le cas où deux passerelles d'accès se trouvent être associées aux mêmes serveurs DNS, et que seule l'une des deux passerelles est en état de fonctionner.

Le test de fiabilité peut comprendre une mesure d'un volume total de données émises vers la passerelle de référence dans le réseau privé et/ou d'un volume total de données reçues dans le réseau privé depuis la passerelle de référence au cours d'une période prédéterminée, la répartition mise en oeuvre par le routeur dépendant du résultat d'une comparaison entre le volume mesuré et un volume seuil associé à la passerelle de référence.

Ceci permet d'augmenter la fiabilité générale d'accès au réseau externe depuis le réseau privé en tenant compte de quota de volumes affectés aux passerelles. On peut par exemple éviter la transmission de données vers une passerelle d'accès reliée à un réseau d'accès dont le débit est bridé en émission ou en réception, voire bloqué, par le fournisseur d'accès correspondant. Par exemple, la route menant au réseau externant en passant par la passerelle de référence peut être exclue de la répartition lorsque le volume de données mesuré franchit le volume seuil associé à la passerelle de référence. On notera en outre que l'augmentation de fiabilité vaut aussi bien en émission qu'en réception. Les passerelles peuvent en effet être sujettes à un quota de volume une émission et un quota de volume en réception.

Chaque routeur voisin de la passerelle de référence dans le réseau privé peut mémoriser dans une mémoire non volatile le volume de données mesuré.

Dès lors, si un des routeurs voisins est mis hors tension, les données mesurées peuvent être récupérées. Cette mémorisation est d'autant plus avantageuse que la période considérée est Longue ; en effet, une perte des données mesurées survenant vers la fin de ladite période serait susceptible de fausser les résultats de fiabilité sans cette mémorisation.

Le test de fiabilité peut en outre comprendre une mesure, par un équipement scrutateur du réseau privé, d'une bande passante d'accès au réseau externe via la passerelle de référence, la répartition mise en oeuvre par le routeur dépendant en outre de la bande passante d'accès mesurée.

Ceci permet de détecter et évaluer des éventuelles variations de débit sur le réseau d'accès du fournisseur de la passerelle d'accès correspondante, mais également de privilégier, dans la répartition de charge mise en oeuvre, des routes passant par des passerelles proposant un meilleur débit pour accéder au réseau externe.

La mesure de bande passante peut être mise en oeuvre si la route menant au réseau externe offerte par la passerelle de référence a été exclue de la répartition.

Ceci permet d'améliorer la précision de la mesure en s'assurant qu'aucun autre équipement du réseau privé n'utilise cette passerelle.

Le test de fiabilité d'accès au réseau externe via la passerelle de référence peut être mis en oeuvre par un routeur voisin de la passerelle de référence dans le réseau privé.

Ceci a pour effet d'éviter de pénaliser la mesure par la présence d'un ou plusieurs liens de mauvaise qualité entre l'équipement qui met en oeuvre le test de fiabilité et la passerelle. Les mesures effectuées auprès d'une passerelle donc sont rendues encore plus précises.

Les mesures de quota de volume en réception et/ou émission peuvent à cet égard être mise en oeuvre par l'ensemble des routeurs voisins de la passerelle de référence dans le réseau privé.

Le procédé peut en outre comprendre la détermination d'une longueur, comptée en fonction du nombre de noeuds du réseau privé et de la qualité de chaque lien, du chemin reliant le routeur à la passerelle d'accès de référence, la répartition mise en oeuvre par le routeur dépendant en outre de la longueur déterminée.

La topologie interne du réseau privé est donc prise en compte.

De la sorte, le routeur qui met en oeuvre la répartition pourra privilégier les chemins les plus rapides.

La répartition peut être mise en oeuvre sélectivement sur un nombre maximum de deux des routes sélectionnées sur la base des résultats de test de fiabilité et des longueurs ainsi calculées.

Ceci permet de répartir plus efficacement le trafic depuis un routeur en éliminant les routes dont le débit pratique (dépendant du débit de la passerelle et de la qualité des liens situés sur le chemin entre le routeur et la passerelle) serait trop faible.

Le procédé peut en outre comprendre les étapes suivantes, le réseau privé comprenant une pluralité de routeurs:

- transmission, à un routeur maître élu parmi les routeurs, des résultats du test de fiabilité mis en oeuvre pour différentes passerelles,
- construction par le routeur maître d'une topologie du réseau privé,
- diffusion, par le routeur maître, des résultats de test de fiabilité et de la topologie à chaque routeur du réseau privé mettant en oeuvre la répartition.

Ceci permet d'adapter le fonctionnement du procédé à un changement de topologie dans le réseau. De plus, la centralisation des données de topologie et des résultats de tests permet de rendre plus fiable la transmission des résultats de tests lorsqu'un tel changement de topologie survient dans le réseau privé.

Le procédé peut en outre comprendre le calcul, pour chaque routeur, d'une priorité associée croissant avec le nombre d'équipements voisins audit routeur dans le réseau privé, et l'élection du routeur ayant la priorité la plus élevée comme routeur maître.

Ceci permet de choisir comme routeur maître, un routeur ayant une position « centrale » dans le réseau privé, et donc de réduire la consommation générale de bande passante consommée par la transmission des résultats de test et l'étape de diffusion.

L'élection du routeur maître peut comprendre les sous-étapes suivantes mises en oeuvre par un routeur de référence ayant une priorité de référence :

- diffusion de la priorité de référence aux autres routeurs de façon répétée selon un délai de répétition prédéterminé, tant que le routeur de référence n'a pas reçu une priorité d'un autre routeur supérieure à la priorité de référence, et
- si le routeur de référence ne reçoit aucune priorité d'un autre routeur dans un délai supérieur au délai de répétition, diffusion aux autres routeurs d'un message de déclaration dans lequel le routeur de référence se déclare routeur maître.

L'élection du routeur maître est mise en oeuvre lors du démarrage d'un routeur du réseau privé.

Le routeur qui vient de démarrer pourra ainsi, s'il est le meilleur candidat, être élu maître en lieu et place du maître existant.

L'élection du routeur maître peut en outre être mise en oeuvre lorsque le routeur maître reçoit un message qui déclare un autre routeur du réseau privé comme routeur maître.

Ceci permet de gérer une situation de conflit dans laquelle deux routeurs du réseau privé se considèrent chacun comme routeur maître. Ceci peut par exemple se produire lors d'une remise en service d'un lien de communication entre deux routeurs du réseau, dont la panne avait engendré la formation de deux ensembles de routeurs élisant chacun son propre routeur maître.

Il est également proposé dans le cadre de la présente invention un routeur adapté pour mettre en oeuvre le procédé de répartition de charge tel que décrit précédemment.

Chaque routeur compris dans le réseau privé tel que décrit précédemment peut mettre en oeuvre ce procédé.

DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 représente schématiquement un routeur selon un mode de réalisation de l'invention,
- La figure 2 représente un réseau privé selon un mode de réalisation de l'invention, connecté à un réseau externe,
- La figure 3 détaille des équipements du réseau privé RP de la figure 2,
- La figure 4 représente la topologie du réseau de la figure 3 sous forme d'arbre,
- Les figures 5 à 7 illustrent des étapes d'un procédé de répartition de charge selon un mode de réalisation de l'invention.

Sur l'ensemble des figures, les éléments similaires portent des références identiques.

DESCRIPTION DETAILLEE DE L'INVENTION

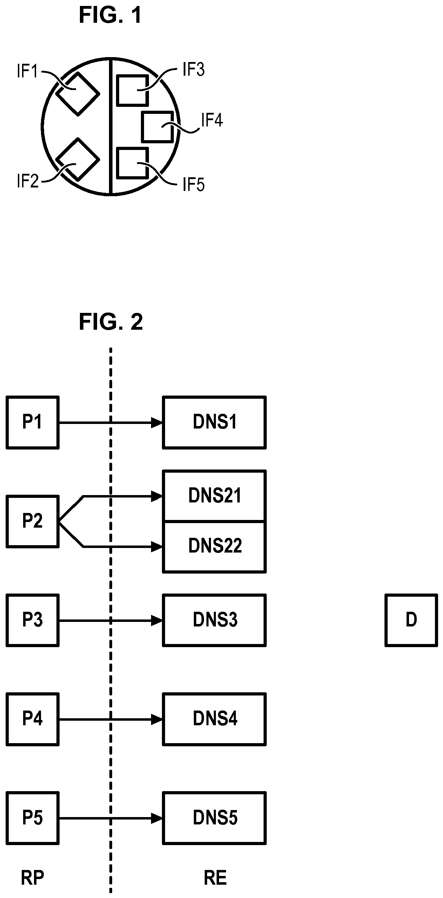

En référence à la figure 1, un routeur comprend une pluralité d'interfaces réseaux utilisées pour deux applications différentes, l'application de chaque interface correspondant au type d'équipement avec lequel le routeur communique via cette interface.

Le routeur comprend au moins une interface réseau adaptée pour communiquer avec un équipement d'un réseau privé RP, par convention représentée par un carré. Le routeur illustré en **figure 1** comprend trois interfaces IF3, IF4, IF5 de ce type.

Le routeur comprend en outre au moins une interface réseau adaptée pour communiquer avec un équipement d'un réseau local comprenant un ou plusieurs terminaux (ordinateurs portables, téléphones, tablettes, consoles de jeux, etc.), par convention représentée par un losange. Le routeur illustré en **figure 1** comprend deux interfaces IF1, IF2 ce type.

Le routeur comprend également des moyens de stockage. Ces moyens de stockage comprennent une ou plusieurs mémoires non volatiles de type flash, SSD et/ou disque dur, intégrées de façon permanente au routeur et/ou se présentant sous la forme d'une clé amovible telle qu'une clé USB.

Les moyens de stockage comprennent également une ou plusieurs mémoires volatiles de type RAM.

Les moyens de stockage sont adaptés pour mémoriser également une table de routage définissant des routes pour transmettre des données.

Le routeur comprend également des moyens de traitement de données configurés pour accéder aux moyens de stockage, recevoir et émettre des données par l'intermédiaire des interfaces réseau, et pour reconfigurer dynamiquement les routes définies dans la table de routage.

Le routeur est apte à traiter et communiquer deux types de données : d'une part, recevoir et émettre des données utiles en provenance d'un équipement source vers un autre équipement, et d'autre part, recevoir et émettre des données de gestion pour la configuration de la table de routage de ce routeur.

Le routeur est par exemple un routeur IP version 4 (Internet Protocol, RFC 791), et de ce fait se fait attribuer une adresse IP dans un réseau privé RP dans lequel le routeur est installé.

En référence à la **figure 2,** un réseau privé RP comprend une pluralité de passerelles d'accès P1 à P5.

Chaque passerelle d'accès P1 à P5 est conforme à l'introduction de la présente demande. Chaque passerelle d'accès P1 à P5 donne donc accès à un réseau externe RE, typiquement internet, par l'intermédiaire de réseaux d'accès respectifs gérés par des fournisseurs d'accès respectifs.

Par convention, on considère dans la suite que le réseau externe RE intègre les différents réseaux d'accès auxquels les différentes passerelles d'accès du réseau privé RP sont raccordées.

Chaque passerelle d'accès est un routeur IP version 4 (Internet Protocol, RFC 791) avec une fonctionnalité de translation de port et d'adresse d'une part, et possédant une et seule connexion au réseau externe RE d'autre part. La connexion de chacune de ces passerelles au réseau externe RE peut s'appuyer sur des technologies de transmission physique variées (fibre, xDSL, Satellite, WiMAX...) offrant chacune des caractéristiques hétérogènes (débit montant, débit descendant, fiabilité, politique de qualité de service, quota de volume...) et peuvent être disposées à des points géographiquement très éloignés, par exemple dans des bâtiments différents.

Chaque passerelle d'accès possède par exemple au moins une adresse IP publique, et est associé avec un ou plusieurs serveurs de nom de domaine, communément appelés serveur DNS (Domain Name System, RFC 1034), P1 est associée à DNS1, P2 associée aux deux serveurs DNS21 et DNS22, P3 est associée à DNS3, P4 associée à DNS4 et P5 associée à DNS5. Chaque serveur DNS possède une adresse IP.

Cette association entre une passerelle d'accès et serveur DNS peut par exemple se concrétiser par un stockage, dans une mémoire interne de la passerelle d'accès, de la liste des adresses IP des serveurs DNS associés à la passerelle. La passerelle est alors configurée pour communiquer avec chaque serveur DNS associé. Chaque passerelle stocke typiquement dans une mémoire interne, et ce pour chacune de ses adresse IP publiques, une adresse IP d'un serveur DNS à joindre pour se faire attribuer le nom de domaine correspondant.

En variante, cette association entre une passerelle d'accès et un serveur DNS peut se concrétiser par l'utilisation d'un équipement mandataire (non-illustré) compris dans le réseau externe RE, l'équipement mandataire étant apte à relayer au serveur DNS des requêtes DNS en provenance de la passerelle.

Les serveurs DNS sont connus en eux-mêmes. On retiendra simplement que de tels serveurs DNS interviennent dans le cadre de la transmission de données émanant du réseau privé RP vers le réseau externe RE, et sont plus précisément adaptés pour déterminer une adresse IP de destination à partir d'une adresse de destination en nom de domaine que le serveur reçoit dans une requête DNS émanant d'un autre équipement, par exemple par stockage et lecture d'une base de données associant des adresses IP avec des adresses en nom de domaine.

Quelle que soit le mode de d'association utilisé, l'homme du métier comprendra que les serveurs DNS sollicités dans le cadre d'une transmission de données émanant du réseau privé RP vers le réseau externe RE pourront être différents selon les passerelles d'accès par laquelle les données sont émises dans le réseau externe RE.

Le réseau privé RP comprend deux types d'équipements : au moins un routeur (ici une pluralité de routeurs R1 à R8) conformes à la description qui précède, et la pluralité de passerelles P1 à P5 d'accès au réseau externe RE.

Chaque routeur R1 à R8 du réseau privé RP est directement connecté à au moins un autre équipement du réseau privé RP, qualifié dans la suite d'équipement « voisin » de ce routeur.

Par convention, on considère dans la suite que le terme « routeur » désigne un équipement du réseau privé RP qui est distinct d'une passerelle d'accès, même si la passerelle d'accès peut intégrer une fonction de routage. En d'autres termes, un routeur peut être connecté à d'autres équipements du réseau privé RP (routeur(s) et/ou passerelle(s) d'accès) mais pas directement au réseau externe RE.

Toujours par convention, on désignera sous le terme « lien » un lien de communication direct entre deux équipements voisins du réseau privé RP, et plus généralement sous le terme « chemin» une liaison entre deux équipements du réseau privé RP voisins ou non. Un chemin du réseau privé RP comprend donc un ou plusieurs liens.

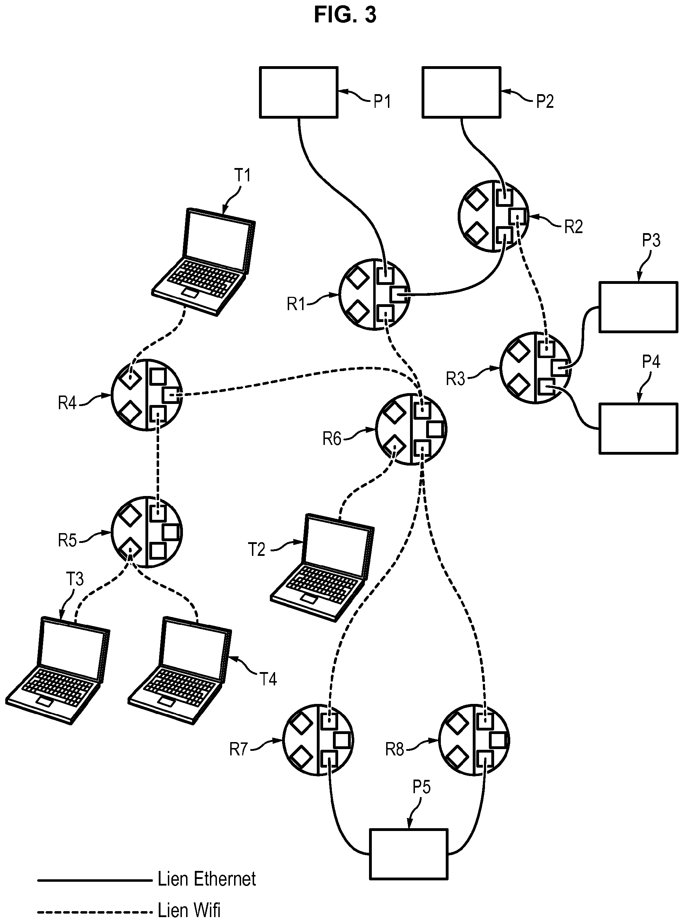

Ce lien peut être de nature diverse, selon la technologie employée. Dans le réseau de la **figure 3,** les liens sous forme de traits continus illustrent des liens de type filaire (Ethernet) et les liens sous forme de traits en pointillés illustrent des liens de type sans fil (Wi-Fi).

La longueur d'un chemin entre deux équipements du réseau privé RP se rapportera dans la suite implicitement au nombre de liens que comprend le chemin joignant ces deux équipements l'un à l'autre dans le réseau privé RP.

Les différents routeurs R1 à R8 sont identiques, c'est-à-dire qu'ils mettent en oeuvre les mêmes fonctionnalités.

On a en outre représenté sur la **figure 3** des terminaux T1, T2, T3 connectés au réseau privé RP via les routeurs R4, R6 et R5 respectivement, dans l'objectif d'obtenir un accès au réseau externe RE via les passerelles P1 à P5.

Aucun terminal T1 à T3 n'est directement connecté à une passerelle d'accès ni ne possède d'adresse IP dans le réseau privé RP.

Les terminaux sont par exemple des ordinateurs, tablettes, téléphones, consoles de jeux localisés sur un périmètre géographique limité ou une zone (une aire extérieure, un bâtiment) en Wi-Fi ou en Ethernet sur un réseau de type LAN (Local Area Network).

Dans le mode de réalisation illustré, les terminaux T1 à T3 sont directement connecté à un routeur du réseau privé RP. Il peut également être prévu que les terminaux T1 à T3 font partie de réseaux locaux (LAN) distincts du réseau privé, et qu'ils communiquent avec des routeurs du réseau privé RP par l'intermédiaire de passerelles dédiées.

L'adressage IP sur un réseau local comprenant un terminal est différent de celui RP. En tout état de cause, les connexions TCP, UDP et ICMP des terminaux subissent une translation d'adresses et de port au niveau des routeurs du réseau privé RP.

*Protocole de configuration des tables de routage*

Comme dit précédemment, chaque routeur R1 à R8 est adapté pour transmettre des données utiles qu'il reçoit d'un premier équipement vers un deuxième équipement, c'est-à-dire mettre en oeuvre une fonction de routage de données dans le réseau privé RP.

Chaque routeur est plus particulièrement adapté pour transmettre des données utiles, vers des passerelles d'accès du réseau privé RP, suivant différents chemin, chaque chemin menant à une passerelle respective.

Chaque routeur est en outre adapté pour communiquer avec les autres routeurs du réseau selon un protocole spécial ayant pour objectif la reconfiguration dynamique de sa table de routage.

Ce protocole, désigné dans la suite de protocole de configuration dynamique, fonctionne par transmission entre les routeurs du réseau privé RP de messages à destination d'un port prédéterminé, par exemple le port 6603. Chaque message est typiquement un datagramme UDP à destination du port 6603. Un message peut être envoyé à un seul destinataire (vers une adresse IP « unicast » du réseau privé RP) ou être diffusé à tous les routeurs du réseau (via une adresse IP de type « broadcast » du réseau privé RP).

Chaque message comporte un entête comprenant les informations suivantes :

- Un identifiant unique du routeur émetteur, de préférence d'au moins 4 chiffres, par exemple un numéro de série unique du routeur émetteur.
- Un numéro de séquence unique incrémenté avec chaque nouveau datagramme envoyé, ce numéro étant par exemple initialisé à 1 au démarrage du routeur.
- Un type de message. Dans le mode de réalisation exposé ci-après, ce type de message est codé sur 4 caractères ASCII et peut prendre les valeurs suivantes : ELEC, VOTE, CHGW, IFLS, NBLS, GWRS, TOPO, GWAK, GWCT.

En fonction du type de message, d'autres informations peuvent être adjointes au message:

- ELEC : aucune information supplémentaire n'est requise.
- VOTE : une valeur de priorité du routeur émetteur.
- IFLS : une liste des interfaces du routeur émetteur.
- NBLS : la liste des équipements voisins au routeur émetteur dans le réseau privé RP.
- TOPO: des données de topologie représentatives du réseau privé RP et une liste de passerelles d'accès dans le réseau.
- GWCH : une adresse IP de passerelle d'accès dans le réseau privé RP.
- GWAK : une adresse IP de passerelle d'accès dans le réseau privé RP.
- GWRS : une liste de passerelles d'accès.
- GWCT : une liste de passerelles et des quantités de données consommées correspondantes.

Le cadre d'utilisation de ces différents messages sera décrit plus loin dans le présent texte.

Chaque routeur R1 à R8 est adapté pour exécuter un programme d'ordinateur, ce programme d'ordinateur comprend des instructions pour mettre en oeuvre le protocole de configuration dynamique ainsi que le routage de données utiles.

On va maintenant décrire différentes opérations mises en oeuvre par les routeurs du réseau privé RP au moyen des messages évoqués ci-dessus.

Le procédé comprend deux phases pouvant chacune être mise en oeuvre de façon répétée:

A. une phase d'initialisation des routeurs R1-R8 du réseau privé RP;

B. une phase de reconfiguration dynamique de la table de de routage des routeurs R1-R8 du réseau privé RP ;

Après chaque reconfiguration, chaque routeur met en oeuvre une répartition de charge pour router des données utiles dans le réseau privé RP, notamment à destination du réseau RE, en tenant compte de cette reconfiguration.

**A. Phase d'initialisation**

*i) Caractérisation des liens de communication entre équipements voisins dans le réseau*

Le réseau privé RP comprend deux types de liens internes:

- des liens entre un routeur et une passerelle d'accès voisine,
- le cas échéant, des liens entre deux routeurs voisins l'un de l'autre, si le réseau privé RP comprend plusieurs routeurs.

Chaque routeur du réseau mémorise les informations suivantes pour chacune de ses interfaces connectées au réseau privé RP :

- le nom de l'interface,
- l'état courant de l'interface (connecté ou non connecté)
- une valeur associée au lien de communication entre l'interface du routeur et un autre équipement, cette valeur étant dans la suite appelée « valeur de lien ».

Cette valeur de lien peut être calculée par les routeurs par la formule suivante :

$$\text{Valeur de lien} = 10000000.(\text{nombre d'hôtes connectés sur le lien})$$
$$/((\text{vitesse courante de synchronisation négociée}).(\text{facteur technologique}))$$

Dans la formule ci-dessus, le nombre d'hôtes connectés sur le lien peut être supérieur à 1 et variable dans le cas par exemple d'un lien sans fil. Dans le cas d'un lien filaire, le nombre d'hôtes vaut 0 ou 1.

Le facteur technologique a une valeur de 1 pour un lien physique employant une technologie filaire à double sens simultanée (« full duplex »), une valeur de 0.5 pour un lien physique employant une technologie filaire à double sens non simultanée (« half duplex ») et un facteur de 0.25 pour une technologie sans fil.

La vitesse de synchronisation négociée est une valeur de débit théorique négociée sur le lien de communication entre le routeur et l'équipement voisin, exprimée en kilobits par seconde. Cette vitesse de synchronisation négociée est par exemple égale à 102400 pour le protocole Ethernet 100BaseT ou 18432 pour un lien de qualité moyenne selon le protocole Wi-Fi 802.11g avec une valeur de taux de transfert courante de 18 Mbits par seconde. Pour un lien de type sans fil sur lequel plusieurs hôtes peuvent se greffer, la vitesse de synchronisation la plus basse parmi tous les hôtes connectés est retenue pour le calcul de la valeur du lien.

Le calcul des valeurs de liens peut être mise en oeuvre par les routeurs de façon répétée dans le temps, par exemple périodiquement, et/ou à leur démarrage.

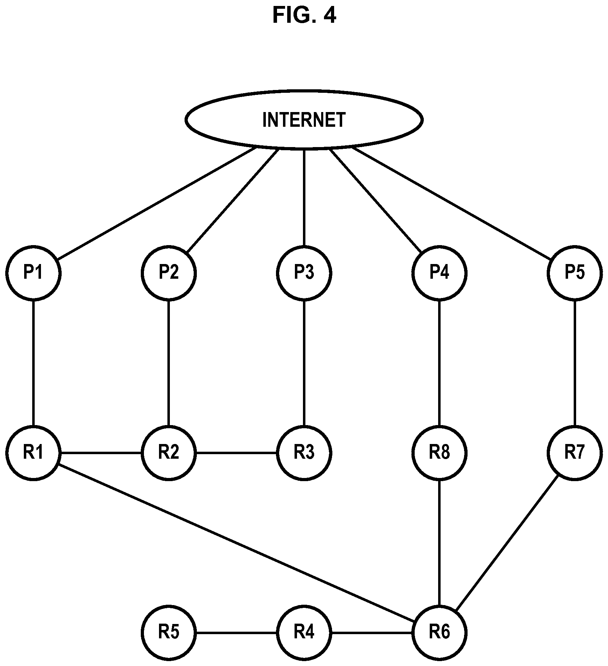

La **figure 4** représente un graphe pondéré non orienté associé au réseau de la **figure 3.**

Dans ce graphe, un noeud représente un équipement du réseau privé RP (routeur ou passerelle). A ce graphe, est ajouté un noeud fictif représentatif du réseau externe RE (ici, « Internet ») avec lequel toutes les passerelles sont liées.

Chaque arête du graphe représente un lien de communication entre deux équipements voisins (deux noeuds). A chaque arête du graphe est donc associé une valeur de lien correspondante, calculée selon la formule décrite précédemment.

*ii) Election d'un routeur maître parmi les routeurs*

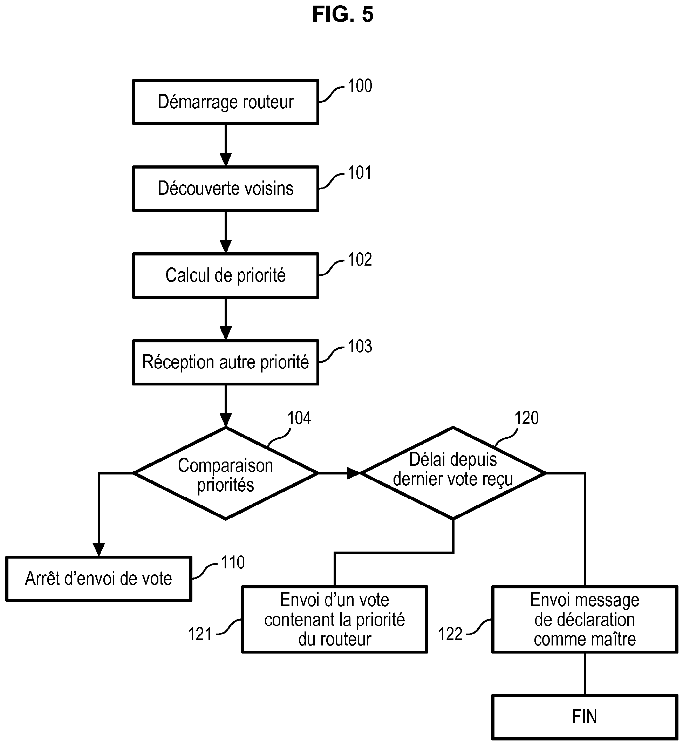

En référence à la **figure 5,** la phase d'initialisation comprend une étape d'élection d'un routeur maître parmi les routeurs du réseau privé RP, les autres routeurs du réseau privé RP étant alors désignés comme routeurs esclaves (les fonctions du routeur maître et celles des routeurs esclave dans le cadre de la reconfiguration de chaque routeur seront exposées plus loin dans le présent texte).

On prend dans la suite l'exemple de la mise en route du routeur R1.

A sa mise en route, le routeur R1 se configure dans un état « d'écoute » (étape 100).

Dans son état d'écoute, le routeur R1 attend de recevoir des datagrammes sur le port 6603 durant un délai prédéterminé de 70 secondes.

Si aucun datagramme de ce type n'est reçu dans ce délai, le routeur R1 invite les autres routeurs du réseau à participer à l'élection d'un routeur maître en diffusant à tous les routeurs du réseau un message ELEC, et se reconfigure dans un état d'« élection ».

Sur réception d'un message ELEC émis par le routeur R1, un autre routeur, par exemple R2, diffuse à son tour un message d'élection ELEC aux autres routeurs et se reconfigure dans l'état d'« élection ».

Tant qu'il se trouve dans le mode « élection », tout routeur émet de façon répétée dans un message VOTE sa valeur de priorité calculée précédemment.

Lorsqu'un routeur en mode élection ne reçoit plus de message ELEC et n'a reçu aucun message VOTE durant un délai de 35 secondes, il diffuse à tous les routeurs un message VOTE sa valeur de priorité.

Lorsqu'un routeur en mode élection reçoit un message VOTE émis par un autre routeur (étape 102), il compare la valeur sa propre priorité avec la valeur de priorité reçue (étape 104).

Si sa valeur de priorité est plus petite que la priorité reçue, le routeur se reconfigure dans l'état d'« écoute » et cesse d'émettre sa propre priorité de façon répétée (étape 110). Ce routeur se borne alors à attendre qu'un autre routeur soit élu routeur maître.

Si sa valeur de priorité est plus grande que la priorité reçue, le routeur diffuse un message VOTE avec sa propre priorité à tous les routeurs du réseau privé RP (étape 121). Il peut rediffuser son message tous les 30 secondes tant qu'il ne reçoit pas de message VOTE avec une priorité plus forte que la sienne.

Un routeur en mode élection mesure le délai écoulé depuis le dernier message VOTE qu'il a reçu (étape 120).

Un routeur qui diffuse toujours son message VOTE et qui ne reçoit plus de message VOTE de la part d'autres routeurs depuis 70 secondes est alors élu maître. Pour se déclarer maître auprès des autres routeurs du réseau privé RP, le routeur maître diffuse un message TOPO (étape 122). Ceci clôt l'étape d'élection, à l'issue de laquelle un des routeurs se trouve élu maître et les autres routeurs sont implicitement des routeurs esclaves.

A été envisagé dans ce qui précède un cas dans lequel l'élection du routeur maître est déclenchée par le démarrage d'un routeur du réseau privé RP (étape 100). D'autres événements peuvent toutefois également déclencher cette élection.

Premièrement, comme on le verra dans la suite, chaque routeur est amené à découvrir les équipements du réseau privé RP qui lui sont voisins. Lorsqu'un routeur « esclave » ne reçoit plus de message TOPO depuis 70 secondes et qu'il découvre toujours au moins un équipement voisin supplémentaire, alors ce routeur peut réclamer une élection tel que décrit précédemment.

Deuxièmement, lorsqu'un routeur se considérant comme maître reçoit un message TOPO d'un autre routeur (phénomène d'un réseau coupé en deux temporairement et qui se retrouve à nouveau entièrement connecté), il peut réclamer une élection telle que décrite précédemment afin de résoudre cette situation de conflit entre plusieurs routeurs s'auto-déclarant maître.

On notera que, dans certaines situations, la présence simultanée de deux routeurs est légitime (par exemple quand le réseau a été coupé en deux). On notera par ailleurs que l'élection mise en oeuvre lors de la réunion des deux parties du réseau privé peut aboutir à un maître qui n'est aucun des deux routeurs maîtres précédents.

La valeur de priorité d'un routeur peut être une valeur dynamique qui dépend du nombre d'équipements voisins en état de fonctionnement dans le réseau privé RP.

La valeur de priorité est par exemple calculée selon la formule suivante:

Priorité du routeur Rx =

10000.(nombre de routeurs voisins à Rx)

+ 5000.(nombre de passerelles voisines à Rx)

+ les 4 derniers chiffres de l'identifiant de Rx + poids configuré statiquement dans Rx.

Dans la formule qui précède, le nombre de routeurs voisins est multiplié à un premier coefficient et le nombre de passerelles voisines est multiplié à un deuxième coefficient inférieur au premier coefficient, ce qui permet de faire en sorte que le nombre de routeurs voisins contribue davantage à augmenter la priorité que le nombre de passerelles voisines. Un routeur occupant une position centrale dans le réseau aura alors davantage de chances d'être désigné maître qu'un routeur situé en périphérique du réseau, par exemple un routeur formant un noeud extrémal du réseau.

Les quatre derniers chiffres de l'identifiant d'un routeur Rx permettent d'augmenter grandement la probabilité d'unicité de chaque priorité, et donc de diminuer les risques d'égalité entre les priorités de deux routeurs différent, source de conflit empêchant une élection rapide d'un routeur maître.

Par défaut, le poids configuré statiquement vaut zéro. Toutefois, le fait de configurer ce poids à une valeur supérieure à zéro permet de donner une priorité plus importante à un routeur plutôt qu'un autre indépendamment du nombre d'équipement, ce que la formule ci-dessus ne permettrait pas sans un poids non nul.

Dans le réseau illustré en **figure 3,** si l'on considère que l'identifiant de chaque routeur Rx est 000x (0002 pour R2 par exemple) et qu'aucun poids statique n'a été configuré à une valeur non nulle, on obtient les valeurs de priorité suivantes :

| Routeur | Priorité |
|---------|----------|
| R1 | 15001 |
| R2 | 15002 |
| R3 | 10003 |
| R4 | 10004 |
| R5 | 5 |
| R6 | 30006 |
| R7 | 5007 |
| R8 | 5008 |

C'est donc R6 qui est alors élu routeur maître dans le réseau de la **figure 3.**

Dans une autre variante, la priorité est une valeur constante prédéterminée propre à chaque routeur, mémorisée par ses moyens de stockage.

*iii) Découverte de la topologie du réseau privé*

Le procédé comprend en outre une étape de découverte de la topologie du réseau (étape 101, illustrée en figure 5). Cette découverte, utilisée lors de la phase d'initialisation, ne se cantonne pas à cette seule initialisation et peut être répétée dans le temps.

Chaque routeur met en oeuvre une étape de découverte des équipements du réseau qui sont voisins à ce routeur (notamment les passerelles d'accès et routeurs voisins).

Pour découvrir ses routeurs voisins, un routeur émet toutes les 30 secondes sur chaque interface réseau physique connectée au réseau privé RP une trame Ethernet LLDP (IEEE 802.1AB) avec pour adresse de destination l'adresse MAC de multidiffusion 01-80-C2-00-00-0E avec une valeur de ChassisID de sous-type 5 (Network Address) égale à l'adresse IP du routeur dans le réseau privé RP, une valeur de PortID de sous-type 5 (Interface Name) égale au nom de l'interface réseau physique utilisée pour envoyer cette trame (par exemple IF3 pour R1) et une valeur de TTL égale à 1.

Le routeur reçoit de chaque voisin en état de marche une trame LLDP correspondante. A partir des trames LLDP reçues, le routeur élabore et mémorise dans ses moyens de stockage volatiles une liste de voisins comprenant les informations suivantes pour chaque équipement voisin:

- l'adresse IP de ce voisin dans le réseau privé RP,
- l'interface réseau contenu dans le message (c'est-à-dire l'interface réseau par laquelle le voisin a reçu la trame Ethernet LLDP)
- l'interface réseau physique par laquelle le routeur a reçu la réponse LLDP
- un horodatage de réception du message de réponse LLDP.
  Lorsqu'aucune trame LLDP en provenance d'un équipement précédemment identifié comme voisin dans la liste n'a pas été reçu dans un délai de 70 secondes, le routeur efface ce voisin de la liste.

Dans le réseau de la **figure 3,** le routeur R4 découvre ainsi ses routeurs voisins R5 et R6.

La liste de voisins est complétée par des éventuelles passerelles Internet voisines au routeur.

Par configuration statique, chaque routeur possède une liste des passerelles au réseau RE directement connectées au routeur (par exemple R3 a les passerelles P3 et P4 dans cette liste statique). Dans cette liste, pour chaque passerelle Internet, peuvent être fournies les informations suivantes:

- l'adresse IP de la passerelle d'accès dans le réseau privé RP,
- une liste non nulle d'adresses IP de serveurs DNS associés à la passerelle,
- un champ de bits représentatif du type de connexion de la passerelle au réseau externe RE, comprenant par exemple les 3 bits de valeurs suivantes :

    o bit[0]: 0 pour sans fil, 1 pour filaire,
    o bit[1]: 0 pour débits asymétriques, 1 pour débits symétriques,
    o bit[2]: 0 pour débits variables, 1 pour débits stables,

- la limite maximale en kilo-octet du quota de volume associé à la passerelle (0 signifiant qu'il n'y a pas de quota associé à la passerelle)
- la fréquence de remise à zéro de ce quota.

Ces deux dernières valeurs (limite maximale et fréquence) peuvent être calquées sur des valeurs imposées par un fournisseur d'accès au réseau externe RE (par exemple 30 giga-octets par mois). Ces deux dernières valeurs peuvent également être choisies de façon à étaler la consommation du quota (dans le cadre de l'exemple, on pourrait choisir de configurer 1 giga-octet par jour).

De plus, pour chaque passerelle avec quota de volume configuré sur le routeur, ce dernier peut sauvegarder dans ses moyens de stockage l'horodatage de la dernière remise à zéro du quota, l'horodatage du dernier relevé de consommation et la quantité de données qui a été consommée depuis la dernière remise à zéro.

Chaque routeur envoie un paquet « ICMP Echo » à chacune des passerelles de sa liste statique de façon répétée, toutes les 30 secondes.

Les passerelles répondant au paquet ICMP Echo sont mémorisées dans la liste des voisins avec leur adresse IP, la liste des adresses IP de serveurs DNS, les caractéristiques de la connexion Internet, les informations relatives au quota de volume s'il y a lieu et l'interface réseau physique par laquelle la réponse a été reçue et l'horodatage de réception de la réponse.

Lorsqu'une passerelle n'a transmis aucune réponse depuis 70 secondes, elle est effacée de la liste des voisins.

La découverte de voisinage est indistinctement mise en oeuvre par le routeur maître et les routeurs esclaves, et peut être mis en oeuvre en parallèle du processus d'élection décrit précédemment.

Une fois que le routeur maître a été élu, chaque routeur esclave envoie un message IFLS au routeur maître de façon répétée, toutes les 30 secondes. Le message IFLS contient la liste des interfaces connectées à RP du routeur émetteur du message IFLS.

Chaque routeur esclave envoie également un message NBLS au routeur maître de façon répétée, toutes les 30 secondes. Le message NBLS contient la liste des équipements voisins du routeur émetteur du message NBLS (routeurs voisins et passerelles d'accès voisines) découverts par l'étape de découverte décrite précédemment.

Le routeur maître collecte donc des messages IFLS et NBLS émanant des autres routeurs du réseau privé RP.

Au bout d'un certain nombre de messages reçus IFLS et NBLS, le routeur maître a connaissance de toutes les passerelles d'accès en état de marche dans le réseau et de toutes les valeurs des liens du réseau.

*iv) Désignation de routeurs scrutateurs*

Le routeur maître élu détermine, pour chaque passerelle d'accès du réseau dont il a connaissance, un routeur scrutateur ayant pour fonction de surveiller l'état de fonctionnement de cette passerelle, comme on le verra dans la suite.

La détermination du scrutateur d'une passerelle donnée peut typiquement être mise en oeuvre par le routeur maître après réception de plusieurs messages NBLS successifs identifiant cette passerelle comme voisine d'un même routeur esclave et que cette passerelle n'a pas encore (ou n'a plus) de routeur scrutateur.

Ceci permet d'attendre que la topologie du réseau perçue par le routeur maitre soit stabilisée avant de désigner des scrutateurs.

Le routeur maître choisit comme routeur scrutateur d'une passerelle donnée un routeur voisin de la passerelle qui a la valeur de lien avec la passerelle la plus faible.

En cas d'égalité de plusieurs valeurs de lien, le routeur maître choisit un scrutateur qui n'est pas déjà scrutateur d'une autre passerelle d'accès, ou à défaut, le routeur ayant le plus grand identifiant.

On notera que si le routeur maître est voisin d'une passerelle et possède la plus petite valeur de lien avec cette passerelle, il peut se désigner lui-même comme scrutateur de cette passerelle.

De préférence un scrutateur est directement relié de manière filaire (en Ethernet) à la passerelle Internet qu'il surveille.

On notera également qu'un même routeur peut être désigné comme scrutateur de plus d'une passerelle d'accès.

Le routeur maître envoie un message CHGW avec l'adresse IP d'une passerelle d'accès au routeur désigné scrutateur.

Le routeur répète l'envoi du même message CHGW tant que le scrutateur ne lui a pas transmis un message GWAK qui accuse réception de sa désignation pour la passerelle concernée.

Avec le réseau illustré en **figure 3,** on obtient ainsi les scrutateurs suivants :

| Passerelle Internet | Routeur désigné « scrutateur » |
|---|---|
| P1 | R1 |
| P2 | R2 |
| P3 | R3 |
| P4 | R3 |
| P5 | R8 |

Pour résumer les rôles des différents routeurs désignés au cours de la phase d'initialisation :

- Le routeur maître est configuré pour recevoir des informations de la part de tous les autres routeurs, agréger ces informations sous la forme d'une topologie réseau, ainsi que la liste des passerelles d'accès disponibles à tous les autres routeurs. Le routeur maître désigne par ailleurs les scrutateurs, comme on l'a vue précédemment.
- Chaque routeur esclave est configuré pour collecter des informations de voisinage relatives aux équipements qui lui sont voisins dans le réseau privé RP (routeurs et/ou passerelles), envoyer ces informations de voisinage au routeur maître, et mettre à jour sa table de routage en fonction d'une topologie reçue du routeur maître.
- Chaque routeur scrutateur est un routeur esclave à qui le routeur maître a confié la responsabilité de surveiller une ou plusieurs passerelle(s) d'accès du réseau privé RP. Un tel routeur scrutateur est configuré pour tester la fiabilité d'accès au réseau à internet par la passerelle surveiller et remonter les résultats de tels tests au routeur maître.

**B. Phase de reconfiguration dynamique des tables de routage**

On suppose qu'un routeur maître a été élu dans le réseau privé RP, les autres routeurs étant implicitement esclaves, et qu'un routeur scrutateur par passerelle d'accès a été désigné.

On va maintenant décrire plus en détail la phase au cours de laquelle la table de routage d'un routeur donné est reconfigurée.

Cette reconfiguration concerne la détermination des routes utilisées par un routeur donné pour transmettre des données au réseau externe RE au travers des différentes passerelles d'accès du réseau privé RP, et également la répartition de charge à effectuer entre ces routes déterminées.

*i) Scrutation des passerelles d'accès*

De façon générale, un routeur scrutateur a pour fonction d'évaluer la fiabilité d'un accès au réseau externe RE depuis le réseau privé RP, via la passerelle d'accès correspondante.

Cette fiabilité concerne notamment :

- la disponibilité des serveurs DNS associés à la passerelle d'accès scrutée,
- une bande passante d'accès au réseau externe pour transmettre des données via la passerelle d'accès scrutée (cette bande passante pouvant être affectée par un bridage mis en oeuvre volontairement par le fournisseur d'accès, comme il a été vu précédemment).

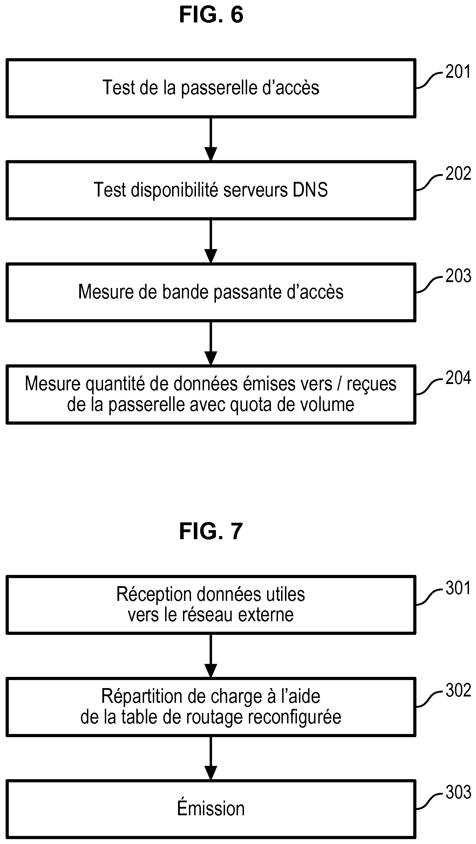

Une fois désigné pour scruter une passerelle donnée (identifiée dans les messages CHGW qu'il reçoit), un routeur scrutateur met en oeuvre les étapes suivantes en référence à la **figure 6.**

Comme indiqué précédemment, le routeur teste la passerelle en émettant un paquet ICMP echo (« Internet Control Message Protocol ») à destination de cette passerelle (étape 201), permettant ainsi de diagnostiquer une mise hors service de la passerelle si celle-ci ne répond pas à la requête ICMP echo dans un délai prédéterminé.

Toutes les 30 secondes, si la passerelle est toujours dans sa liste dynamique de voisins (réponse au paquet ICMP Echo), le routeur désigné scrutateur émet deux requêtes DNS avec un délai maximum d'attente de 5 secondes entre chaque requête pour chaque serveur DNS dans la liste correspondante à la passerelle (étape 202).

Si au moins une réponse est reçue dans les délais, la passerelle est considérée comme étant dans un état « immédiat fonctionnel » et sinon, dans un état « immédiat non fonctionnel » sinon.

On comprendra ici que ces deux états immédiats ne se réfèrent pas à une aptitude de la passerelle concernée à communiquer avec d'autres équipements du réseau privé RP (cette aptitude étant évaluée par la requête ICMP echo), mais évaluent la disponibilité d'un service de résolution de nom de domaine, pour des données émises sur le réseau externe via cette passerelle.

La passerelle est considérée comme étant dans un état « relatif fonctionnel » lorsqu'un état immédiat fonctionnel a été constaté plusieurs fois de suite, par exemple trois fois de suite.

Lorsqu'une passerelle est dans l'état relatif fonctionnel, elle ne bascule dans l'état relatif non fonctionnel qu'à la suite de plusieurs états non fonctionnels immédiats, par exemple deux.

Les deux états relatifs évaluent donc non seulement la disponibilité stable dans la durée ou l'absence de disponibilité stable dans la durée d'un nom de domaine pour une passerelle.

Le scrutateur envoie ensuite un message GWRS au routeur maître, le message GWRS listant pour chacune des passerelles qu'il surveille, son adresse IP et son état relatif.

Le routeur scrutateur mesure par ailleurs un débit d'accès au réseau privé RP par la passerelle d'accès qu'il scrute.

Selon une fréquence qui dépend des caractéristiques de la connexion au réseau d'accès de chaque passerelle, le routeur « maître » retire périodiquement une passerelle de la liste qu'il diffuse dans son message TOPO à tous les routeurs, ceci afin de forcer les routeurs à ne plus utiliser cette passerelle pour libérer la bande passante en vue d'effectuer une mesure de celle-ci.

Lorsqu'un routeur désigné scrutateur ne retrouve pas 4 fois de suite une des passerelles qu'il surveille dans la liste transmise par le maître dans un message TOPO, cela signifie qu'il doit faire une mesure de bande passante d'accès via la passerelle (étape 203). La méthodologie de cette mesure est connue en elle-même, et ne sera donc pas davantage décrite.

La mesure de bande passante est renvoyée lors de chaque message GWRS et elle comprend l'horodatage de la mesure ainsi qu'une valeur calculée selon la formule suivante :

$$\text{Bande passante} = 10000000/((\text{débit montant mesuré en kilo bit par seconde} \times 0{,}25 + \text{débit descendant mesuré en kilo bit par seconde} \times 0{,}75))$$

Par ailleurs, chaque routeur mesure une quantité cumulée de données utiles reçues et émises pour chaque passerelle avec quota de volume ainsi que l'horodatage de ce relevé (étape 204).

Toutes les 10 minutes ou suite à la suppression d'une route vers RE qui passait par une passerelle avec quota de volume, chaque routeur envoie au routeur maître, un message GWCT comprenant la quantité cumulée de données reçues et émises pour chaque passerelle avec quota de volume ainsi que l'horodatage de ce relevé. Le routeur remet à jour ses compteurs suite à l'envoi de ce message.

Comme on l'aura compris, les étapes 201 à 204 sont effectuées en parallèle les unes des autres.

*ii) Diffusion des résultats de test*

Les messages GWRS contenant des mesures de bande passante et des états relatifs de passerelles, et les messages GWCT contenant des volumes de données cumulés sont reçus par le routeur maître.

Le routeur maître agrège les messages GWCT de chaque routeur afin de connaître la quantité de données consommées pour chaque passerelle avec un quota de volume. Pour chaque passerelle à quota, Le routeur maître envoie toutes les 11 minutes à chaque routeur voisin de cette passerelle, un message GWCT comprenant l'adresse IP de la passerelle, ainsi que la quantité cumulée de données consommées.

Lorsque le routeur maître constate à l'issue d'une comparaison, que le quota est atteint ou dépassé, la passerelle concernée est retirée de la liste transmise périodiquement dans le message TOPO et il envoie un message GWCT à chacun des routeurs voisins de cette passerelle. Par la suite, le routeur maître envoie un message GWCT avec une valeur égale à 0 pour la quantité de données lorsque le quota est remis à zéro (temps écoulé).

Les routeurs voisins de passerelles Internet à quota de volume sauvegardent dans leurs moyens de stockage non volatiles l'horodatage et la quantité transmis par le routeur maître dans un message GWCT. Ainsi, ces informations peuvent être récupérées suite à un redémarrage des routeurs, ou une coupure de courant.

Si le quota est atteint, le routeur voisin qui avait été désigné scrutateur de cette passerelle cesse immédiatement d'être scrutateur de celle-ci. En effet, comme on le verra plus loin, la passerelle ne sera plus utilisée tant que ce quota est dépassé ; il en résulte que cette passerelle n'a alors pas besoin de scrutateur. Faire l'économie d'un scrutateur permet de limiter la transmission de donnée échangées au cours de la mise en oeuvre du protocole proposé.

Lorsque le quota est remis à zéro, le routeur maître désigne à nouveau un scrutateur selon le processus décrit précédemment.

Les données centralisées par le routeur maître sont ensuite diffusées à l'ensemble des routeurs du réseau privé RP.

Toutes les 30 secondes, le routeur maître diffuse un message TOPO à tous les routeurs comprenant deux listes :

- une liste de routeurs avec pour chacun son adresse IP, une liste d'interfaces réseau physiques connectés au réseau privé RP (avec pour chaque interface : nom de l'interface et valeur du lien), une liste de voisins (adresse IP, nom de l'interfaces réseau physique, type routeur ou passerelle)
- une liste de passerelles Internet avec pour chacune son adresse IP, une liste d'adresses IP de serveurs DNS, la dernière mesure de bande passante, le dernier état relatif ainsi qu'un booléen indiquant s'il s'agit d'une passerelle avec quota de volume ou non.

*iii) Mise à jour des tables de routage*

Tous les routeurs recevant le message TOPO (ainsi que le routeur maître) mettent alors à jour leur table de routage en fonction des informations reçues.

Pour cela, le routeur génère un graphe pondéré non orienté conforme à la **figure 4** à partir des informations reçues dans le message TOPO.

Le poids associé à chaque arête entre un noeud passerelle et le noeud Internet est égal à la valeur de la dernière mesure de bande passante (telle que présentée précédemment).

Le routeur applique alors l'algorithme de plus court chemin de Djikstra entre le noeud le représentant et le noeud « Internet ». Il mémorise alors le poids complet du chemin trouvé ainsi que la passerelle empruntée. Le noeud représentant cette passerelle est ensuite retiré du graphe et l'algorithme de plus court chemin de Djikstra est à nouveau exécuté.

Si un nouveau chemin est trouvé, le routeur mémorise alors le poids complet de ce nouveau chemin ainsi que la passerelle empruntée. Le routeur met ensuite à jour sa table de routage en associant à chacune des passerelles trouvées à la route vers Internet (routes vers 0.0.0.0 / 0 dites routes par défaut) et leur associant une métrique proportionnelle au poids des différents chemins.

Dans le mode de réalisation illustré sur les figures, les routeurs connectés à RP ne possèdent qu'une seule route IP pour faire transiter les données d'un équipement à un autre du réseau privé RP. Cette route est la route dite « réseau ». Cette route n'est pas modifiée au cours de la reconfiguration des tables de routages. En revanche, les mécanismes permettant d'envoyer les données d'un équipement à un autre sur RP sont du ressort de la couche 2 du modèle OSI.

Par exemple si l'adressage sur RP est 192.168.1.0/24 (notation CIDR), tous les équipements (routeurs ou passerelles) sur RP ont une et une seule entrée qui n'est jamais modifiée dans leur table de routage :

| Adresse | Masque | Gateway | Interface |
|---|---|---|---|
| 192.168.1.0 | 255.255.255.0 | 0.0.0.0 | X |

**Phase de routage et de répartition de charge**

On décrit dans ce qui suit comment un routeur dont la table de routage a été configurée met en oeuvre une répartition de charge dans le réseau privé RP.

On suppose dans ce qui suit que les routeurs scrutateurs du réseau représenté en **figure 3** ont obtenu les résultats de test de fiabilité suivants au moyens des étapes décrites précédemment:

- le serveur DNS1 associé à la passerelle P1 est indisponible,
- la passerelle P2 subit une défaillance (ne répond pas),
- la passerelle P3 et le serveur DNS3 associé à cette passerelle P3 fonctionnent de façon normale, et la dernière bande passante mesurée par son routeur scrutateur vaut une valeur X.
- la passerelle P4 et le serveur DNS4 associé à cette passerelle P4 fonctionnent de façon normale, et la dernière bande passante mesurée par son routeur scrutateur vaut X/3.

- la passerelle P5 a atteint son quota de volume.
- Le chemin allant de R4 à P3 a un poids plus faible que celui allant de R4 à P4.

On suppose également que les routeurs du réseau privé RP ont été reconfigurés à partir du graphe de la **figure 4** et des résultats de test de fiabilité.

Un terminal émet un jeu de données visant à établir une nouvelle connexion à destination du réseau externe RE, par exemple le terminal T1. On suppose que ce jeu de données contient une adresse IP de destination, par exemple 1.2.3.4.

Chaque routeur du réseau privé utilisé pour l'acheminement de ce jeu de données met en oeuvre les étapes illustrées en **figure 7.**

Ce jeu de données est reçu par le routeur R4 (étape 301). Au vu de l'état des passerelles énoncés précédemment, suite à la dernière mise à jour de sa table de routage, R4 possède deux routes vers le réseau externe RE, l'une passant par P3 avec une métrique de 1 et l'autre passant par P4 avec une métrique très élevée. Le jeu de données visant à établir une nouvelle connexion a donc une probabilité plus importante d'être envoyée vers la passerelle P3.

Les données transitent de R4 à P3 en suivant le chemin R4-R6-R1-R2-R3-P3.

La passerelle P3 transmet les données reçues de R3 dans le réseau externe RE.

Les données sont ensuite acheminées jusqu'à l'équipement destinataire ayant l'adresse IP 1.2.3.4. En réponse, les données émises par 1.2.3.4 à destination de T1 transiteront par PE et R4 selon le mécanisme inverse.

*Autres variantes de réalisation*

Le procédé selon l'invention n'est pas limité au mode de réalisation décrit précédemment. Les caractéristiques suivantes peuvent être sujettes à des variantes :

- Le type de messages utilisés par les routeurs scrutateurs pour tester la fiabilité des passerelles d'accès peut être différent.
- Les calculs de poids, valeurs de liens, priorités peuvent également être différents.
- Les délais prédéterminés et évoqués précédemment peuvent êtres positionnés à des valeurs différentes.
- Le nombre maximum de routes peut être porté à une valeur plus grande que 2.
- La politique de répartition en fonction des bandes passantes mesurées peut être différente.
- les différents tests de fiabilité peuvent être effectués par d'autres types d'équipements du réseau privé RP que les routeurs mettant en oeuvre la répartition de charge (par exemple un ou plusieurs équipement(s) dédié(s)).
- Les différents types de tests de fiabilité réalisés pour une passerelle d'accès donnée peuvent être mise en oeuvre par des équipements différents du réseau privé RP.

Le procédé selon l'invention est utilisable dans plusieurs domaines.

Le procédé peut servir à relier plusieurs bâtiments et leurs extérieurs appartenant à une même organisation (entreprise, université, hôpital...) afin de partager les connexions Internet arrivant en deux points distincts ou plus.

Le procédé peut également être employé dans le cadre d'un réseau Wi-Fi communautaire afin de partager intelligemment les connexions Internet des différents membres de la communauté que soit en zone résidentiel ou dans une zone commerciale où différents petits commerces d'une rue ou d'un quartier offrirait un service Wi-Fi à tous leurs clients.

L'invention offre également un avantage certain même si l'ensemble des passerelles Internet sont regroupées géographiquement au même endroit. En effet, plutôt que de tout déléguer à un équipement singulier type « équilibreur de charge » pour la gestion du trafic entre toutes les passerelles, l'invention permet de se prémunir de la panne de cet équipement unique en rendant autonome le routage vers Internet depuis chacun des routeurs. En effet, grâce au procédé de l'invention, la panne d'un routeur n'entraîne que la perte des connexions physiques qu'il possédait sur le réseau.

**Revendications**

1. Procédé de répartition de charge dynamique dans un réseau privé (RP) comprenant au moins un routeur (R1-R8) et une pluralité de passerelles d'accès (P1-P5) à un réseau externe (RE), chaque passerelle offrant une route menant au réseau externe (RE) et étant associée à au moins un serveur de nom de domaine (DNS) intervenant dans la transmission dans le réseau externe (RE) de données en provenance de la passerelle, le procédé étant **caractérisé par** les étapes suivantes:

- test de fiabilité d'un accès au réseau externe (RE) via une passerelle de référence, le test de fiabilité comprenant un test de disponibilité (202) d'au moins un serveur DNS associé à la passerelle de référence,
- répartition (302) sur lesdites routes et émission (303), par le routeur, de données à destination du réseau externe (RE), en fonction des résultats du test de fiabilité.

dans lequel le test de fiabilité comprend au moins une des étapes suivantes :

- émission (201), par un équipement scrutateur du réseau privé (RP), d'un moins une première requête de test à destination de chaque serveur DNS associé à la passerelle de référence, la route offerte par la passerelle de référence étant exclue de la répartition si l'équipement scrutateur ne reçoit aucune réponse à au moins une des premières requêtes de test dans un délai prédéterminé,
- émission, par un équipement scrutateur du réseau privé (RP), d'une deuxième requête de test à destination de la passerelle de référence, la route offerte par la passerelle de référence étant exclue de la répartition si l'équipement scrutateur ne reçoit pas de réponse à la deuxième requête de test dans un délai prédéterminé,
- mesure (203) d'un volume total de données émises vers la passerelle de référence dans le réseau privé (RP) et/ou d'un volume total de données reçues dans le réseau privé depuis la passerelle de référence au cours d'une période prédéterminée, la répartition mise en oeuvre par le routeur dépendant du résultat d'une comparaison entre le volume mesuré et un volume seuil associé à la passerelle de référence, et/ou
- mesure (204), par un équipement scrutateur du réseau privé (RP), d'une bande passante d'accès au réseau externe (RE) via la passerelle de référence, la répartition mise en oeuvre par le routeur dépendant en outre de la bande passante d'accès mesurée.

2. Procédé selon la revendication 1, dans lequel chaque routeur voisin de la passerelle de référence dans le réseau privé (RP) mémorise dans une mémoire non volatile le volume de données mesuré.

3. Procédé selon l'une des revendications 1 à 2, dans lequel la mesure de bande passante (204) est mise en oeuvre si la route offerte par la passerelle de référence a été exclue de la répartition (302).

4. Procédé selon l'une des revendications 1 à 3, dans lequel le test de fiabilité d'accès au réseau externe via la passerelle de référence est mis en oeuvre par un routeur voisin de la passerelle de référence dans le réseau privé (RP).

5. Procédé selon l'une des revendications 1 à 4, comprenant en outre la détermination d'une longueur, fonction du nombre de noeuds du réseau privé (RP) ainsi que du type et de la qualité de la connexion physique du lien emprunté entre chaque noeud, d'un chemin reliant le routeur à la passerelle d'accès de référence, la répartition (302) mise en oeuvre par le routeur dépendant en outre de la longueur déterminée.

6. Procédé selon l'une des revendications 1 à 5, dans lequel la répartition est mise en oeuvre sélectivement sur un nombre maximum de deux routes sélectionnées sur la base des résultats de test de fiabilité.

7. Procédé selon l'une des revendications 1 à 6, comprenant en outre les étapes suivantes, le réseau privé (RP) comprenant une pluralité de routeurs (R1-R8):

- transmission, à un routeur maître (R6) élu parmi les routeurs (R1-R8), des résultats du test de fiabilité mis en oeuvre pour différentes passerelles,
- construction par le routeur maître d'une topologie du réseau privé (RP),
- diffusion, par le routeur maître, des résultats de test de fiabilité et de la topologie à chaque routeur du réseau privé (RP) mettant en oeuvre la répartition (302).

8. Procédé selon la revendication 7, comprenant les étapes de :

- calcul, pour chaque routeur, d'une priorité associée croissant avec le nombre d'équipements voisins audit routeur dans le réseau privé (RP),
- élection du routeur ayant la priorité la plus élevée comme routeur maître.

9. Procédé selon la revendication 8, dans lequel l'élection du routeur maître comprend les sous-étapes suivantes mises en oeuvre par un routeur de référence ayant une priorité de référence :

- diffusion (121) de la priorité de référence aux autres routeurs de façon répétée selon un délai de répétition prédéterminé, tant que le routeur de référence n'a pas reçu une priorité d'un autre routeur supérieure à la priorité de référence, et
- si le routeur de référence ne reçoit aucune priorité d'un autre routeur dans un délai supérieur au délai de répétition, diffusion (122) aux autres routeurs d'un message de déclaration dans lequel le routeur de référence se déclare routeur maître.

10. Procédé selon l'une des revendications 8 à 9, dans lequel l'élection du routeur maître est mise en oeuvre lors du démarrage d'un routeur du réseau privé (RP) et/ou lorsque le routeur maître reçoit un message qui déclare un autre routeur du réseau privé (RP) comme routeur maître.

11. Routeur pour un réseau privé (RP), le réseau privé (RP comprenant une pluralité de passerelles d'accès (P1-P5) à un réseau externe (RE), chaque passerelle offrant une route menant au réseau externe (RE) et étant associée à au moins un serveur de nom de domaine (DNS) intervenant dans la transmission dans le réseau externe (RE) de données en provenance de la passerelle, le routeur comprenant au moins une interface réseau et des moyens de traitement de données, le routeur étant **caractérisé en ce que** les moyens de traitement de données sont configurés pour:

- mettre en oeuvre un test de fiabilité d'un accès au réseau externe (RE) via une passerelle de référence, le test de fiabilité comprenant un test de disponibilité (202) d'au moins un serveur DNS associé à la passerelle de référence,
- répartir (302) sur lesdites routes et émettre (303) des données à destination du réseau externe (RE), en fonction des résultats du test de fiabilité,
dans lequel le test de fiabilité comprend au moins une des étapes suivantes:

- émission (201) d'au moins une première requête de test à destination de chaque serveur DNS associé à la passerelle de référence, la route offerte par la passerelle de référence étant exclue de la répartition si le routeur ne reçoit aucune réponse à au moins une des premières requêtes de test dans un délai prédéterminé,
- émission d'une deuxième requête de test à destination de la passerelle de référence, la route offerte par la passerelle de référence étant exclue de la répartition si l'équipement scrutateur ne reçoit pas de réponse à la deuxième requête de test dans un délai prédéterminé,
- mesure (203) d'un volume total de données émises vers la passerelle de référence dans le réseau privé (RP) et/ou d'un volume total de données reçues dans le réseau privé depuis la passerelle de référence au cours d'une période prédéterminée, la répartition mise en oeuvre par le routeur dépendant du résultat d'une comparaison entre le volume mesuré et un volume seuil associé à la passerelle de référence, et/ou
- mesure (204) d'une bande passante d'accès au réseau externe (RE) via la passerelle de référence, la répartition mise en oeuvre par le routeur dépendant en outre de la bande passante d'accès mesurée.

**Patentansprüche**

1. Verfahren zur dynamischen Lastverteilung in einem privaten Netzwerk (RP), zumindest einen Router (R1-R8) und eine Vielzahl von Zugangsgateways (P1-P5) in ein externes Netzwerk (RE) umfassend, wobei jedes Gateway eine Route anbietet, die ins externe Netzwerk (RE) führt und zumindest einem Domain-Namen-Server (DNS) zugeordnet ist, der an der Übertragung von Daten aus dem Gateway in das externe Netzwerk (RE) mitwirkt, wobei das Verfahren durch die folgenden Schritte gekennzeichnet ist:

- Zuverlässigkeitstest eines Zugangs ins externe Netzwerk (RE) über ein Referenzgateway, wobei der Zuverlässigkeitstest einen Verfügbarkeitstest (202) zmindest eines DNS-Servers umfasst, welcher dem Referenzgateway zugeordnet ist,
- Verteilung (302) der besagten Routen und Emission (303) von Daten über den Router in Richtung des externen Netzwerks (RE) in Abhängigkeit von den Ergebnissen des Zuverlässigkeitstests.
wobei der Zuverlässigkeitstest zumindest einen der folgenden Schritte umfasst:

- Emission (201) zumindest einer ersten Testanfrage durch eine Prüfausrüstung des privaten Netzwerks (RP) in Richtung eines jeden DNS-Servers, der dem Referenzgateway zugeordnet ist, wobei die vom Referenzgateway angebotene Route von der Verteilung ausgeschlossen wird, wenn die Prüfausrüstung innerhalb einer vorbestimmten Frist keine Antwort auf zumindest eine der ersten Testanfragen erhält,

- Emission einer zweiten Testanfrage durch eine Prüfausrüstung des privaten Netzwerks (RP) in Richtung des Referenzgateways, wobei die vom Referenzgateway angebotene Route von der Verteilung ausgeschlossen wird, wenn die Prüfausrüstung innerhalb einer vorbestimmten Frist keine Antwort auf die zweite Testanfrage erhält,

- Messung (203) eines Gesamtvolumens an Daten, die zum Referenzgateway im privaten Netzwerk (RP) gesendet werden, und/oder eines Gesamtvolumens an Daten, die im Laufe eines vorbestimmten Zeitraums vom Referenzgateway im privaten Netzwerk empfangen werden, wobei die Verteilung, die vom Router vorgenommen wird, vom Ergebnis eines Vergleichs zwischen dem gemessenen Volumen und einem Grenzvolumen abhängt, das dem Referenzgateway zugeordnet ist, und/oder

- Messung (204) einer Zugangsbandbreite zum externen Netzwerk (RE) über das Referenzgateway durch eine Prüfausrüstung des privaten Netzwerks (RP), wobei die vom Router vorgenommene Verteilung darüber hinaus von der gemessenen Zugangsbandbreite abhängt.

2. Verfahren nach Anspruch 1, wobei jeder benachbarte Router des Referenzgateways im privaten Netzwerk (RP) in einem nichtflüchtigen Speicher das gemessene Datenvolumen abspeichert.

3. Verfahren nach einem der Ansprüche 1 bis 2, wobei die Messung der Bandbreite (204) dann vorgenommen wird, wenn die vom Referenzgateway angebotene Route von der Verteilung (302) ausgeschlossen worden ist.

4. Verfahren nach einem der Ansprüche 1 bis 3, wobei der Zuverlässigkeitstest eines Zugangs in das externe Netzwerk über das Referenzgateway durch einen benachbarten Router des Referenzgateways im privaten Netzwerk (RP) vorgenommen wird.

5. Verfahren nach einem der Ansprüche 1 bis 4, darüber hinaus die Bestimmung einer Länge eines Pfades, der den Router mit dem Referenz-Zugangsgateway verbindet, in Abhängigkeit von der Anzahl an Knoten des privaten Netzwerks (RP), sowie vom Typen und der Qualität der physikalischen Verbindung des zwischen jedem Knoten in Anspruch genommenen Links umfassend, wobei die Verteilung (302), die vom Router vorgenommen wird, darüber hinaus von der bestimmtn Länge abhängt.

6. Verfahren nach einem der Ansprüche 1 bis 5, wobei die Verteilung selektiv an einer maximalen Anzahl von zwei ausgewählten Routen auf der Basis der Ergebnisse des Zuverlässigkeitstests vorgenommen wird.

7. Verfahren nach einem der Ansprüche 1 bis 6, darüber hinaus die folgenden Schritte umfassend, wobei das private Netzwerk (RP) eine Vielzahl von Routern (R1-R8) umfasst:

- Übertragung der Ergebnisse des Zuverlässigkeitstests, der für verschiedene Gateways durchgeführt wird, an einen Master-Router (R6), der aus den Routern (R1-R8) ausgewählt wird,
- Konstruktion durch den Master-Router einer Topologie des privaten Netzwerks (RP),
- Verteilung durch den Master-Router der Ergebnisse des Zuverlässigkeitstests und der Topologie an jeden Router des privaten Netzwerks (RP) durch Anwenden der Verteilung (302).

8. Verfahren nach Anspruch 7, die folgenden Schritte umfassend:

- Berechnung für jeden Router einer zugeordneten Priorität, die mit der Anzahl der Ausrüstungen wächst, die dem besagten Router im privaten Netzwerk (RP) benachbart sind,
- Wahl des Routers, der die höchste Priorität besitzt, zum Master-Router.

9. Verfahren nach Anspruch 8, wobei die Wahl des Master-Routers die folgenden Unterschritte umfasst, die durch einen Referenz-Router vorgenommen werden, der eine Referenzpriorität aufweist:

- Verteilung (121) der Referenzpriorität auf die anderen Router in wiederholter Form entsprechend einer vorbestimmten Wiederholzeit, solange der Referenzrouter keine Priorität eines anderen Routers erhalten hat, die höher ist, als die Referenzpriorität, und
- falls der Referenzrouter innerhalb einer Zeit, die größer ist als die Wiederholzeit, keine Priorität eines anderen Routers erhält, die Verteilung (122) einer Erklärungsnachricht an die anderen Router, in der sich der Referenzrouter zum Master-Router erklärt.

**10.** Verfahren nach einem der Ansprüche 8 bis 9, wobei die Wahl des Master-Routers beim Starten eines Routers des privaten Netzwerks (RP) vorgenommen wird, und/oder wenn der Master-Router eine Nachricht erhält, die einen anderen Router des privaten Netzwerks (RP) zum Master-Router erklärt.

**11.** Router für ein privates Netzwerk (RP), wobei das private Netzwerk (RP) eine Vielzahl von Zugangsgateways (P1-P5) in ein externes Netzwerk (RE) umfasst, wobei jedes Gateway eine Route anbietet, die ins externe Netzwerk (RE) führt und zumindest einem Domain-Namen-Server (DNS) zugeordnet ist, der an der Übertragung von Daten aus dem Gateway in das externe Netzwerk (RE) mitwirkt, wobei der Router zumindest eine Netzwerkschnittstelle und Mittel zur Datenverarbeitung umfasst, wobei der Router **dadurch gekennzeichnet ist, dass** die Mittel zur Datenverarbeitung konfiguriert sind, um:

- einen Zuverlässigkeitstest für einen Zugang in das externe Netzwerk (RE) über ein Referenzgateway vorzunehmen, wobei der Zuverlässigkeitstest einen Verfügbarkeitstest (202) zmindest eines DNS-Servers umfasst, welcher dem Referenzgateway zugeordnet ist,
- Daten auf den besagten Routen zu verteilen (302) und je nach den Ergebnissen des Zuverlässigkeitstests in Richtung des externen Netzwerks (RE) zu senden, wobei der Zuverlässigkeitstest zumindest einen der folgenden Schritte umfasst:
- Emission (201) zumindest einer ersten Testanfrage in Richtung eines jeden DNS-Servers, der dem Referenzgateway zugeordnet ist, wobei die vom Referenzgateway angebotene Route von der Verteilung ausgeschlossen wird, wenn der Router innerhalb einer vorbestimmten Frist keine Antwort auf zumindest eine der ersten Testanfragen erhält,
- Emission einer zweiten Testanfrage in Richtung des Referenzgateways, wobei die vom Referenzgateway angebotene Route von der Verteilung ausgeschlossen wird, wenn die Prüfausrüstung innerhalb einer vorbestimmten Frist keine Antwort auf die zweite Testanfrage erhält,
- Messung (203) eines Gesamtvolumens an Daten, die zum Referenzgateway im privaten Netzwerk (RP) gesendet werden, und/oder eines Gesamtvolumens an Daten, die im Laufe eines vorbestimmten Zeitraums vom Referenzgateway im privaten Netzwerk empfangen werden, wobei die Verteilung, die vom Router vorgenommen wird, vom Ergebnis eines Vergleichs zwischen dem gemessenen Volumen und einem Grenzvolumen abhängt, das dem Referenzgateway zugeordnet ist, und/oder
- Messung (204) einer Zugangsbandbreite zum externen Netzwerk (RE) über das Referenzgateway, wobei die vom Router vorgenommene Verteilung darüber hinaus von der gemessenen Zugangsbandbreite abhängt.

**Claims**

**1.** Method for dynamic load balancing in a private network (RP) comprising at least one router (R1-R8) and a plurality of access gateways (P1-P5) to an external network (RE), each gateway providing a route to the external network (RE) and being associated with at least one domain name server (DNS) operating in the transmission in the external network (RE) of data from the gateway, with the method being **characterised by** the following steps:

- reliability test access to the external network (RE) via a reference gateway, the reliability test comprising an availability test (202) of at least one DNS server associated with the reference gateway,
- balancing (302) on said roads and transmitting (303), by the router, data to the external network (RE), based on the results of the reliability test,
wherein the reliability test comprises at least one of the following steps:

- emitting (201), by a scanning equipment of the private network (RP), of at least one first test request to each DNS server associated with the reference gateway, wherein the route provided by the reference gateway is excluded from the balancing if the scanning equipment does not receive any response to at least one of the first test requests within a predetermined period of time,
- emitting, by a scanning equipment of the private network (RP), of a second test request to the reference gateway, wherein the route provided by the reference gateway is excluded from the balancing if the scanning equipment does not receive any response to the second test request within a predetermined period of time,
- measuring (203) a total volume of data emitted to the reference gateway in the private network (RP) and/or of a total volume of data received in the private network from the reference gateway during a predetermined period, wherein the balancing carried out by the router depends on the result of a comparison between the measured volume and a threshold volume associated with the reference gateway, and/or
- measuring (204), by a scanning equipment of the private network (RP), of an access bandwidth to the external network (RE) via the reference gateway, wherein the balancing carried out by the router further depends on the measured access bandwidth.

2. Method according to claim 1, wherein each neighbouring router of the reference gateway in the private network (RP) memorises in a non-volatile memory the measured volume of data.

3. Method according to one of claims 1 to 2, wherein the measurement of the bandwidth (204) is carried out if the route provided by the reference gateway was excluded from the balancing (302).

4. Method according to one of claims 1 to 3, wherein the reliability test of access to the external network via the reference gateway is carried out by a neighbouring router of the reference gateway in the private network (RP).

5. Method according to one of claims 1 to 4, further comprising the determining of a length, according to the number of nodes of the private network (RP) as well as the type and the quality of the physical connection of the link borrowed between each node, of a path connecting the router to the reference access gateway, wherein the balancing (302) carried out by the router further depending on the determined length.

6. Method according to one of claims 1 to 5, wherein the balancing is carried out selectively on a maximum number of two routes selected on the basis of the results of the reliability test.

7. Method according to one of claims 1 to 6, further comprising the following steps, wherein the private network (RP) comprising a plurality of routers (R1-R8):

- transmitting, to a master router (R6) elected from the routers (R1-R8), results of the reliability test implemented for different gateways,
- constructing by the master router of a topology of the private network (RP),
- sending, by the master router, of the results of the reliability test of the topology to each router of the private network (RP) carrying out the balancing (302).

8. Method according to claim 7, comprising the steps of:

- calculating, for each router, an associated priority that increases with the number of neighbouring pieces of equipment to said router in the private network (RP),
- electing of the router that has the highest priority as master router.

9. Method according to claim 8, wherein electing the master router comprises the following substeps implemented by a reference router that has a reference priority:

- sending (121) the reference priority to the other routers in a repeated manner according to a predetermined distribution timeframe, as long as the reference router has not received a priority from another router that is higher than the reference priority, and
- if the reference router does not receive any priority from another router within a timeframe exceeding the repetition period, sending (122) to the other routers a declaration message wherein the reference router is declared as the master router.

10. Method according to one of claims 8 to 9, wherein electing of the master router is carried out during the starting of a router of the private network (RP) and/or when the master router receives a message that declares another router of the private network (RP) as the master router.

11. Router for a private network (RP), wherein the private network (RP) comprises a plurality of access gateways (P1-P5) to an external network (RE), each gateway providing a route to the external network (RE) and being associated with at least one domain name server (DNS) operating in the transmission in the external network (RE) of data from the gateway, wherein the router comprises at least one network interface and means for processing data, wherein the router is **characterised in that** the means for processing data are configured to:

- carried out a reliability test access to the external network (RE) via a reference gateway, the reliability test comprising an availability test (202) of at least one DNS server associated with the reference gateway,
- balancing (302) over said routes and emit (303) data to the external network (RE), based on the results of the reliability test,
wherein the reliability test comprises at least one of the following steps:

- emitting (201) of at least one first test request to each DNS server associated with the reference gateway, wherein the route provided by the reference gateway is excluded from the balancing if the router does not receive any response to at least one of the first test requests within a predetermined period of time,
- emitting of a second test request to the reference gateway, wherein the route provided by the reference gateway is excluded from the balancing if the piece of scanning equipment does not receive a response to the second test request within a predetermined period of time,
- measuring (203) of a total volume of data emitted to the reference gateway in the private network (RP) and/or of a total volume of data received in the private network from the reference gateway during the predetermined period, wherein the balancing carried out by the router depends on the result of a comparison between the measured volume and a threshold volume associated with the reference gateway, and/or
- measurement (204) of an access bandwidth to the external network (RE) via the reference gateway, wherein the distribution carried out by the router further depends on the measured access bandwidth.

# FIG. 1

# FIG. 2

# FIG. 3

Lien Ethernet

Lien Wifi

# FIG. 4

# FIG. 5

```
┌──────────────────────┐
│  Démarrage routeur    │──╮ 100
└──────────────────────┘
           │
           ▼
┌──────────────────────┐
│  Découverte voisins   │──╮ 101
└──────────────────────┘
           │
           ▼
┌──────────────────────┐
│  Calcul de priorité   │──╮ 102
└──────────────────────┘
           │
           ▼
┌──────────────────────┐
│ Réception autre priorité │──╮ 103
└──────────────────────┘
           │
           ▼
      ╱╲ 104                    ╱╲ 120
     ╱  ╲                      ╱  ╲
    ╱Comparaison╲──────────▶ ╱ Délai depuis ╲
    ╲ priorités  ╱           ╲dernier vote reçu╱
     ╲  ╱                      ╲  ╱
      ╲╱                        ╲╱

┌──────────────────────┐   ┌──────────────────┐   ┌──────────────────┐
│ Arrêt d'envoi de vote │   │  Envoi d'un vote  │   │  Envoi message    │
└──────────────────────┘   │ contenant la priorité │ de déclaration   │
            110            │   du routeur      │   │ comme maître      │
                     121   └──────────────────┘ 122└──────────────────┘
                                                         │
                                                         ▼
                                                ┌──────────────────┐
                                                │       FIN         │
                                                └──────────────────┘
```

## FIG. 6

| Test de la passerelle d'accès | 201 |

↓

| Test disponibilité serveurs DNS | 202 |

↓

| Mesure de bande passante d'accès | 203 |

↓

| Mesure quantité de données émises vers / reçues de la passerelle avec quota de volume | 204 |

## FIG. 7

| Réception données utiles vers le réseau externe | 301 |

↓

| Répartition de charge à l'aide de la table de routage reconfigurée | 302 |

↓

| Émission | 303 |

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7881208 B1